# EUROPÄISCHE PATENTSCHRIFT

(11) **EP 1 000 247 B1**
(45) Veröffentlichungstag und Bekanntmachung des Hinweises auf die Patenterteilung: **08.05.2002**
(21) Anmeldenummer: 98942614.3
(22) Anmeldetag: 23.07.1998
(51) Int. Cl.: F04D 29/04

(54) **LAGERUNG FÜR EINEN ROTOR EINER STRÖMUNGSMASCHINE SOWIE DEREN VERWENDUNG**
MOUNTING FOR A TURBO-MACHINE ROTOR AND ITS USE
LOGEMENT POUR UN ROTOR D'UNE TURBOMACHINE, AINSI QUE SON UTILISATION

(30) Priorität: 26.07.1997 DE 19732316
(43) Veröffentlichungstag der Anmeldung: 17.05.2000
(73) Patentinhaber: Allweiler AG, D-78315 Radolfzell (DE)
(72) Erfinder: WERNER, Stefan, D-78315 Radolfzell (DE)
(74) Vertreter: Hiebsch, Gerhard F., Dipl.-Ing.
(86) Internationale Anmeldenummer: EP9804638
(87) Internationale Veröffentlichungsnummer: WO9905418

(56) Entgegenhaltungen:
- EP-A- 0 694 696
- CH-A- 377 651
- DE-A- 3 802 950
- US-A- 5 529 464

## Beschreibung

Die Erfindung betrifft eine Lagerung für einen Rotor einer Strömungsmaschine mit zumindest einem Permanentmagnetlager zur radialen Führung sowie mit wenigstens einem -- den Achsschub der Strömungsmaschine aufnehmenden -- hydrodynamischen Gleitlager zur axialen -- oder zur axialen und radialen -- Führung in der Betriebsphase. Zudem umfaßt die Erfindung eine Verwendung der Strömungsmaschine.

Es ist bekannt, die Schmierung von Wälz- und Gleitlagern in Strömungsmaschinen in vielen Fällen durch das Strömungsmedium selbst zu realisieren. Bei Verwenden verschleißfester Lagermaterialien -- wie etwa Siliziumnitrid in Wälzlagern oder Siliziumkarbid in Gleitlagern -- läßt sich die Lebensdauer der so geschmierten Lager erhöhen.

Der Einsatz hydrodynamischer und hydrostatischer Gleitlager führt zu einer Lagerung ohne Berührung der Gleitflächen in der Betriebsphase und somit zu einer verschleißarmen Lagerung. Berührungsfreie Lagerungen werden auch durch die Nutzung elektrischer oder magnetischer Kräfte, -- beispielsweise in aktiven Magnetlagern nach WO 95/13477 --, in Lagern mit supraleitenden Materialien oder in Permanentmagnetlagern -- dargestellt. Dabei ist zur Erzielung der Tragwirkung kein Schmiermedium nötig. Permanentmagnet-Lager kommen stets in Verbindung mit anderen Lagerarten zum Einsatz, da es nach dem Gesetz von Earnshaw nicht möglich ist, einen statischen Körper ausschließlich mit Hilfe von Permanentmagneten in allen drei Raumrichtungen stabil zu lagern. Meist werden sie in Kombination mit einem aktiven Magnetlager verwendet. Im übrigen gibt es bei aktiven Magnetlagern Ausführungen, bei denen der Rotor in den An- und Auslaufphasen durch Wälzlager radial geführt wird, um Rotorschwingungen zu unterdrücken.

Auch sind hydraulische Ausgleichseinrichtungen wie beispielsweise Ausgleichsscheiben, die mit dem Strömungsmedium einen Achsschubausgleich erzeugen, bekannt. Zur Unterstützung des Achsschubausgleichs in transienten Betriebsphasen beschreibt EP 0 355 796 die Kombination eines Achsschubausgleichs mit einer aktiven magnetischen Vorrichtung. Eine Kombination einer Einrichtung zum Achsschubausgleich mit einer Abhebevorrichtung, die mit Hilfe von Permanentmagneten die Berührung der Entlastungsscheiben im Stillstand vermeidet, ist der EP 0 694 696 zu entnehmen. Die Permanentmagnete haben dabei keine Lagerfunktion.

Die bekannten Lagerausführungen weisen einige Mängel auf. Wälz- und Gleitlager werden bei Schmierung durch schlecht schmierende -- z.B. sehr niederviskose -- Medien hoch beansprucht und erreichen nur kurze Betriebszeiten bzw. müssen oft gewartet oder ausgetauscht werden. Andere Lager haben den Nachteil, daß zur einwandfreien Funktion der Lager beim Anfahren und teilweise auch im Betrieb zusätzlicher technischer Aufwand erforderlich wird: hydrostatische Gleitlager erfordern eine Druckquelle, die -- z.B. bei der Anwendung der Lager in Pumpen -- in der Betriebsphase zwar auch durch die Pumpe selbst dargestellt sein kann, aber zum Anfahren extern vorhanden sein muß. Ähnliches gilt für hydrodynamische Gleitlager, deren hohes Anfahrmoment oft durch entsprechende technische Maßnahmen, z.B. hydrostatisches Anfahren, kompensiert werden muß. Hydraulische Ausgleichsvorrichtungen bedürfen in bisherigen Ausführungen ebenfalls technischer Einrichtungen, z.B. zusätzlicher Lager, um den Achsschub der Strömungsmaschine in den transienten Betriebsphasen auszugleichen und um hohe Anfahrmomente beispielsweise durch die Berührung von Ausgleichsscheiben zu verhindern. Aktive Magnetlager benötigen zu ihrer Funktion elektrische Energie und eine aktive Regelung sowie zusätzliche Hilfslager für den Fall des Ausfalls der Magnetlager.

Beim Einsatz supraleitender Magnetlager, z.B. bei der Verwendung von kryogenen -- tiefkalten -- Strömungsmedien, ist ein zusätzlicher Aufwand notwendig, um die richtige Position des Rotors bei Temperaturen oberhalb der supraleitenden Phase der Supraleiter zu gewährleisten. Bei der Verwendung kryogener Medien besteht bei vielen der genannten Lager die Gefahr der Blockierung des Rotors durch Anfrieren von im kryogenen Medium enthaltenen Verunreinigungen während des Stillstands der Strömungsmaschine.

In Kenntnis dieser Gegebenheiten hat sich der Erfinder das Ziel gesetzt, eine verschleißarme Lagerung von Rotoren von Strömungsmaschinen zu verwirklichen, die kein Schmiermittel außer dem Strömungsmedium aufweisen, wobei sich die Lagerung des Rotors durch ein niedriges Anfahrmoment und einen geringen technischen Aufwand bei der Realisierung auszeichnen soll.

Zur Lösung dieser Aufgabe führt die Lehre des unabhängigen Patentanspruches; die Unteransprüche geben günstige Weiterbildungen an. Zudem fallen in den Rahmen der Erfindung alle Kombinationen aus zumindest zwei der in den Ansprüchen offenbarten Merkmale.

Erfindungsgemäß sind in der Betriebsposition des Rotors die Bauteile von einem oder mehreren Permanentmagnetlager/n auf dem Rotor gegenüber den zugehörigen Bauteilen auf der Gehäuseseite axial entgegengesetzt zur Richtung des Achsschubes der Strömungsmaschine aus der Kräftegleichgewichtslage versetzt, und es wird eine dem Achsschub entgegengesetzt gerichtete Kraft erzeugt, die bewirkt, daß die Gleitflächen der in der Betriebsphase wirksamen hydrodynamischen Gleitlager während der Auslaufphasen voneinander getrennt werden und der Rotor gegen ein oder mehrere zusätzliche Gleitoder Wälzlager gedrückt wird; diese übernehmen die Führung des Rotors während der Anfahr- und Auslaufphasen und sind konstruktiv so ausgeführt, daß sie bei niedrigen Drehzahlen sowie im Stillstand ein wesentlich geringeres Reibmoment aufweisen als die in der Lagerung verwendeten hydrodynamischen Gleitlager.

Im Rahmen der Erfindung wird also der Rotor mit Hilfe eines oder mehrerer Permanentmagnetlager radial geführt. Die axiale Führung wird von einem oder mehreren einseitig wirkenden hydrodynamischen Gleitlagern übernommen, wobei der Rotor der Strömungsmaschine durch den in der Betriebsphase auftretenden Achsschub gegen das bzw. die Lager gedrückt wird. Bei entsprechender Ausführung der hydrodynamischen Lager ist auch die Aufnahme radialer Kräfte durch die hydrodynamischen Gleitlager im Betrieb möglich. Die Permanentmagnetlager dienen gleichzeitig als Abhebevorrichtung für die Gleitflächen der hydrodynamischen Gleitlager.

Durch axialen Versatz der rotorseitigen Lagerelemente zu den gehäuseseitigen Lagerelementen wird eine dem Achsschub entgegengerichtete Kraft erzeugt, welche die Gleitflächen der hydrodynamischen Lager in den Auslaufphasen voneinander trennt. Im Stillstand sowie während der An- und Auslaufphasen wird der Rotor von einem oder mehreren Gleitoder Wälzlagern geführt, die bei geringen Drehzahlen sowie im Stillstand ein wesentlich geringeres Reibmoment aufweisen als die verwendeten hydrodynamischen Lager; hierdurch wird das Anfahrmoment der Strömungsmaschine minimiert.

Mit dem Ziel, in der Anlaufphase das axiale Verfahren des Rotors in die Betriebsposition mit geringem technischen Aufwand zu erreichen, wird der oben erwähnte axiale Versatz des Rotors bevorzugt so begrenzt, daß die auftretenden Magnetkräfte der Permanentmagnetlager in axialer Richtung geringer bleiben als der minimale Achsschub der Strömungsmaschine im Betrieb. Dadurch verfährt der Rotor beim Anfahren selbsttätig in Betriebsposition.

Ist eine Begrenzung des axialen Versatzes des Rotors nicht möglich oder nicht erwünscht, kann der Rotor bzw. das Hilfslager erfindungsgemäß während der Anlaufphasen mit Hilfe einer zusätzlichen Einrichtung -- beispielsweise eines Elektromagneten -- axial in Richtung des oder der hydrodynamischen Lager verfahren werden, bis der Achsschub der Strömungsmaschine die axialen Magnetkräfte der Permanentmagnetlager übersteigt und der Rotor selbsttätig in Betriebsposition verfährt.

Zur Lagerung eines Rotors einer Strömungsmaschine mit gasförmigem oder sehr niederviskosem Strömungsmedium wird mit der Erfindung zudem die Ausführung der hydrodynamischen Gleitlager als aerodynamische Gleitlager vorgeschlagen.

Zur Vereinfachung der Konstruktion und zur Verminderung der Spaltverluste können die hydrodynamischen Gleitlager nach einem anderen Merkmal der Erfindung an Deckscheiben geschlossener Laufräder angeschlossen werden. Die Schmierspalten dienen dann gleichzeitig als Dichtspalte für die Laufräder. Dazu hat es sich als günstig erwiesen, die rotorseitige Gleitfläche zumindest eines hydrodynamischen Gleitlagers in die Stirnseite eines Laufrades mit Deckscheibe zu integrieren und das Gleitlager an dieser Stelle eine Dichtung der Hochdruckseite des Laufrades gegen die Niederdruckseite bilden zu lassen.

Nach einem weiteren Merkmal der Erfindung kann der Rotor radial durch die Permanentmagnetlager gelagert sowie ein hydrodynamisches Axiallager nahe dem Schwerpunkt des Rotors vorgesehen sein; nahe dem Schwerpunkt des Rotors mag ein Hilfslager -- insbesondere ein Kegel-Gleitlager -- angeordnet werden. Vorteilhafterweise kann das Hilfslager in die Rückseite eines Laufrades integriert werden.

Im Rahmen der Erfindung liegt es auch, den Rotor eines die Strömungsmaschine antreibenden Elektromotors -- beispielsweise einen als Synchronmotor mit Permanentmagneterregung ausgebildeten Elektromotor -- in den Rotor der Strömungsmaschine zu integrieren.

Aus Gründen höherer Standdauern sind nach einer weiteren erfinderischen Maßnahme Lager- oder Magnetringe der Permanentmagnetlager, gegebenenfalls auch ein Erregermagnet oder Magnetring des Elektromotors, durch bevorzugt elektrisch leitende Schutzringe geschützt. Bei besonders hohen Drehzahlen sollten die rotorseitigen Magnetringe mit besonders festen, gewichtsarmen Bandageringen -- etwa aus kohlefaserverstärktem Kunststoff -- geschützt werden.

Als günstig hat es sich auch erwiesen, dem hydrodynamischen Gleitlager wenigstens ein hydrostatisches Gleitlager oder eine hydraulische Ausgleichseinrichtung unterstützend zuzuordnen oder aber das hydrodynamische Gleitlager durch ein hydrostatisches Gleitlager oder eine hydraulische Ausgleichseinrichtung zu ersetzen. Auch kann in einem Magnetlager erfindungsgemäß ein Vorsatzläufer vorgesehen werden. Letzterer wird dann innerhalb des rotorseitigen Lagerringes befestigt.

Die mit der Erfindung erzielten Vorteile bestehen insbesondere im geringen technischen Aufwand, mit dem eine verschleißarme, durch eine hohe Lebensdauer ausgezeichnete Lagerung realisiert werden kann. Es ist keine elektrische oder hydraulische Energiezufuhr und auch keine Regelvorrichtung zum Betrieb der Lagerung notwendig. Die Lagerung ist mit wenigen Bauteilen fertigungstechnisch einfach und mit geringem Gewicht herzustellen. Bei der Verwendung eines einzelnen aerodynamischen Lagers zur axialen Lagerung des Rotors ist keine zusätzliche federnde Lagerung einer Gleitfläche bzw. ihrer Elemente nötig.

Die Lagerung erlaubt kleine Spaltspiele und ermöglicht dadurch die Minimierung von Spaltverlusten, insbesondere bei Strömungsmaschinen mit sehr niederviskosen Strömungsmedien. Beim Betrieb einer Strömungsmaschine mit kryogenen Medien wird durch die erfindungsgemäße Lagerung des Rotors die Gefahr von Anfrierungen durch Verunreinigungen im Stillstand minimiert, weil die Pumpenspalte im Stillstand gegenüber dem Betriebszustand vergrößert sind und eine Berührung zwischen Rotor und Gehäuse nur im Bereich der Hilfslager auftritt. Eine Lagerung des Rotors durch axial und radial wirkende Hilfslager während der An- und Auslaufphasen ermöglicht es, schwingungskritische Drehzahlbereiche der Permanentmagnetlager unkritisch zu durchfahren.

Flüssiger Wasserstoff ist sehr niederviskos sowie ein sehr schlechtes Schmiermedium und stellt deshalb besondere Anforderungen an die Lagerung von Strömungsmaschinen, die mit diesem Medium arbeiten. Aufgrund der sehr niedrigen Betriebstemperaturen ist die Schmierung der Lager mit Hilfe eines zusätzlichen Schmiermittels nicht möglich, da das Schmiermittel in die feste Phase übergehen würde. In der Raumfahrt wurde bisher hauptsächlich mit herkömmlichen Gleit- oder Wälzlagern gearbeitet, deren hoher Verschleiß bei den auftretenden kurzen Betriebsdauern und Lebensdauern toleriert werden konnte. Für geplante Anwendungen flüssigen Wasserstoffs als Treibstoff in der Luftfahrt und anderen Bereichen ist dieser Verschleiß problematisch.

Die erfindungsgemäße Lagerung der vorgestellten Kreiselpumpe leistet einen Beitrag zur Erhöhung der Lebensdauer und Betriebsbereitschaft von Strömungsmaschinen, die mit flüssigem Wasserstoff arbeiten.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1:: eine Pumpe zur Förderung flüssigen Wasserstoffs im Längsschnitt mit einer erfindungsgemäßen Lagerung des Rotors in Betriebsstellung;
- Fig. 2:: den Rotor der Pumpe aus Fig. 1;
- Fig. 3:: eine Prinzipskizze der erfindungsgemäßen Lagerung des Rotors in Betriebsstellung;
- Fig. 4:: eine Prinzipskizze zu einer anderen Lagerung des Rotors in Ruhestellung.
- Fig. 5 bis Fig. 7:: drei Prinzipskizzen zu unterschiedlichen Permanentmagnetlagern im Längsschnitt ;
- Fig. 8 bis Fig. 10:: Ausführungsbeispiele der Integration eines hydrodynamischen Gleitlagers in ein Laufrad mit Deckscheibe einer Pumpe;
- Fig. 11::: eine hydraulische Ausgleichseinrichtung im Längsschnitt;
- Fig. 12:: ein hydrostatisches Gleitlager im Längsschnitt;
- Fig. 13:: einen Längsschnitt durch ein Permanentmagnetlager mit integriertem Vorsatzläufer.

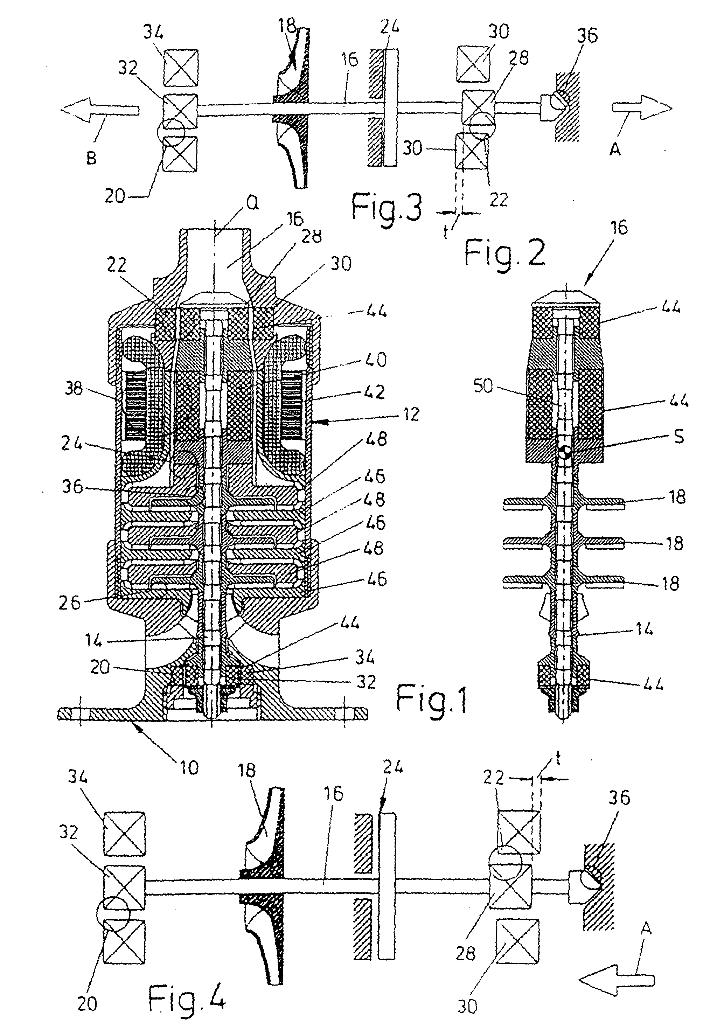

Eine Kreiselpumpe 10 nach Fig. 1 ist speziell als Tauchpumpe für die Förderung flüssigen Wasserstoffs ausgelegt. Sie arbeitet eingetaucht in ein Fördermedium und hat in einem Gehäuse 12 eine senkrecht stehende Rotorachse 14 eines Rotors 16, der in Fig. 2 nochmals gesondert dargestellt ist. Auf dem Rotor 16 sind drei halboffene Laufräder 18 zur Förderung des Mediums und zur Erhöhung des Mediendruckes angeordnet.

Der Rotor 16 wird radial durch Permanentmagnetlager 20, 22 gelagert. Ein hydrodynamisches Axiallager 24 liegt in der Nähe des Schwerpunktes S des Rotors 16. Es ist in der Bauart für ein aerodynamisches Gleitlager konstruiert mit einem Tragspalt von etwa 1 µm. Dadurch wird mit dem Schmiermittel flüssiger Wasserstoff eine ausreichende Tragkraft erzeugt. Da bei der beschriebenen Pumpe die radiale Steifigkeit der Magnetlager 20, 22 gegenüber der axialen Steifigkeit des Axiallagers 24 sehr gering ist, kann auf die bei sehr kleinen Tragspalten übliche federnde Lagerung einer der Gleitflächen bzw. seiner Elemente verzichtet werden. Der kleine Tragspalt des Axiallagers 24 und seine hohe axiale Steifigkeit ermöglichen eine sehr genaue Einstellung der Spalte 26 zwischen den Schaufeln der halboffenen Laufräder 18 und den Gehäusewänden. Dadurch können die Spaltverluste minimiert werden. In der Betriebsposition des Rotors 16 ist ein rotorseitiger Lagerring bzw. innerer Magnetring 28 des oberen Magnetlagers 22 um etwa 0,1 mm gegenüber dessen äußerem Magnetring 30 als gehäuseseitigem Lagerring nach oben versetzt, so daß die nötige Kraft zum Abheben des Rotors 16 vom Gleitlager 24 in der Auslaufphase erzeugt wird. Entsprechende Lager- oder Magnetringe 32, 34 des unteren Magnetlagers 20 weisen im Betriebszustand keinen Versatz auf.

Ein Hilfslager 36 zur Begrenzung der axialen Bewegung des Rotors 16 befindet sich ebenfalls in der Nähe des Schwerpunktes S des Rotors 16. Es ist als Kegel-Gleitlager in die Rückseite des letzten Laufrades 18 integriert und führt den Rotor 16 in den An- und Auslaufphasen auch radial; die radiale Führung des Rotors 16 durch das Hilfslager 36 und dessen Anordnung in Schwerpunktnähe des Rotors 16 erleichtern das Durchfahren des ersten Starrkörpermodus des Rotors 16 bei niedrigeren Drehzahlen.

Der Rotor eines die Pumpe antreibenden Elektromotors 38, der als Synchronmotor mit Permanentmagnet-Erregung ausgeführt ist, wurde in den Rotor 16 der Pumpe 10 integriert. Ein großer Luftspalt zwischen Erregermagnet 40 und Rückschlußeisen 42 sowie die eisenlose Ausführung des Elektromotors 38 auf der Rotorseite gewährleisten geringe instabile Kräfte dieses Elektromotors 38 in radialer Richtung, so daß eine radiale Lagerung des Rotors 16 durch die Permanentmagnetlager 20, 22 mit relativ geringer radialer Steifigkeit möglich wird. Der große Luftspalt erlaubt zusätzlich die Leitung des gesamten Förderstroms durch den Spalt, wodurch eine gute Kühlung des Elektromotors 38 gewährleistet ist. Die Magnetringe 28, 30, 32, 34 der Lager 22 bzw. 20 und der Erregermagnet oder Magnetring 40 des Elektromotors 38 sind durch metallische Schutzringe 44 vor Beschädigung geschützt. Zusätzlich dienen letztere zur Dämpfung der Rotorschwingungen, da in ihnen bei Schwingungen des Rotors 16 durch die Felder der Magnete dämpfende Wirbelströme induziert werden.

Zur Erhöhung der Verschleißfestigkeit -- und um das Gewicht der Pumpe 10 zu minimieren -- können einzelne Bauelemente des Rotors 16 -- wie Laufräder 18, Zwischenscheiben 45 -- sowie Gehäusescheiben 46, 48 aus Keramik gefertigt sein. Die keramischen Bauelemente des Rotors 16 werden durch einen Zugbolzen 50 zusammengehalten. Die auf den Rotor 16 während des Betriebs wirkenden Biegebelastungen werden von den Nabenquerschnitten der Bauelemente als Druckkräfte aufgenommen.

Die Prinzipskizze der Fig. 3 für die erfindungsgemäße Lagerung zeigt den Rotor 16 einer Strömungsmaschine mit Laufrad 18, der mit Hilfe der Permanentmagnetlager 20, 22 radial berührungsfrei gelagert ist. In der Betriebsphase der Strömungsmaschine erzeugt das Laufrad 18 einen Schub in axialer Richtung, der vom hydrodynamischen Gleitlager 24 aufgenommen wird. Die Bauteile 28 des Magnetlagers 22 auf dem Rotor 16 sind bei dessen Anschlag an das hydraulische Gleitlager 24 gegenüber den Bauteilen 30 des Magnetlagers 22 auf der Gehäuseseite um ein Maß t axial zum Hilfslager 36 hin versetzt angeordnet, so daß aufgrund der instabilen Kennlinie der Lagerkräfte des Permanentmagnetlagers 22 in axialer Richtung eine Magnetkraft A in axialer Richtung entsteht, die der Schubkraft B des Laufrads 18 entgegengesetzt gerichtet ist. Wird der Rotor 16 vom Gleitlager 24 abgehoben, entsteht auch beim Permanentmagnetlager 20 ein axialer Versatz der rotorseitigen Bauteile 32 gegenüber den gehäuseseitigen Bauteilen 34. Die resultierenden Kräfte in axialer Richtung der Magnetlager 20, 22 nehmen mit zunehmendem Abstand des Rotors 16 vom Gleitlager 24 zu.

Der axiale Versatz der Lagerbauteile wird begrenzt durch das Hilfslager 36, das in Fig. 3 als Kegel-Gleitlager ausgeführt ist. Zwischen den Anschlägen an den Lagern 24 und 36 ist der Rotor 16 der Strömungsmaschine frei beweglich. Die Anordnung der Lagerelemente der Lager 20, 22, 24, 36 ist derart festgelegt, daß die durch das Permanentmagnetlager 22 erzeugte axiale Kraft groß genug ist, um den Rotor 16 in der Auslaufphase der Strömungsmaschine vom hydrodynamischen Gleitlager 24 abzuheben. Der Versatz des Rotors 16 wird durch das Hilfslager 36 begrenzt, so daß der minimale vom Laufrad 18 in der Betriebsphase erzeugte Axialschub größer ist als die maximale von den Permanentmagnetlagern 20, 22 erzeugte Kraft in axialer Richtung, die beim Anschlag des Rotors 16 an das Hilfslager 36 entsteht. Dadurch wird gewährleistet, daß der Rotor 16 im Betrieb vom Hilfslager 36 abhebt und vom hydrodynamischen Gleitlager 24 ohne Berührung der Gleitflächen axial geführt wird. In der Auslaufphase wird der Rotor 16 durch die Magnetkräfte wieder vom hydrodynamischen Lager 24 abgehoben und gegen das Hilfslager 36 gedrückt. Eine geeignete Wahl der Lagerwerkstoffe sowie ein geringer Durchmesser des Hilfslagers 36 gewährleisten ein niedriges Anfahrmoment der Lagerung.

Bei der Ausgestaltung nach Fig. 4 steht der Rotor 16 in Ruhelage und der rotorseitige innere Magnetring 28 des Magnetlagers 22 laufradseitig um das Maß t über. Die Magnetkraft A weist dabei in Richtung auf das Laufrad 18. Hier drückt die Magnetkraft A den Rotor 16 aus dem Hilfslager 36 in die Betriebsstellung. Nicht dargestellt ist, daß eine Hubeinrichtung wie ein Elektromagnet zum Abheben aus der Betriebsstellung erforderlich ist.

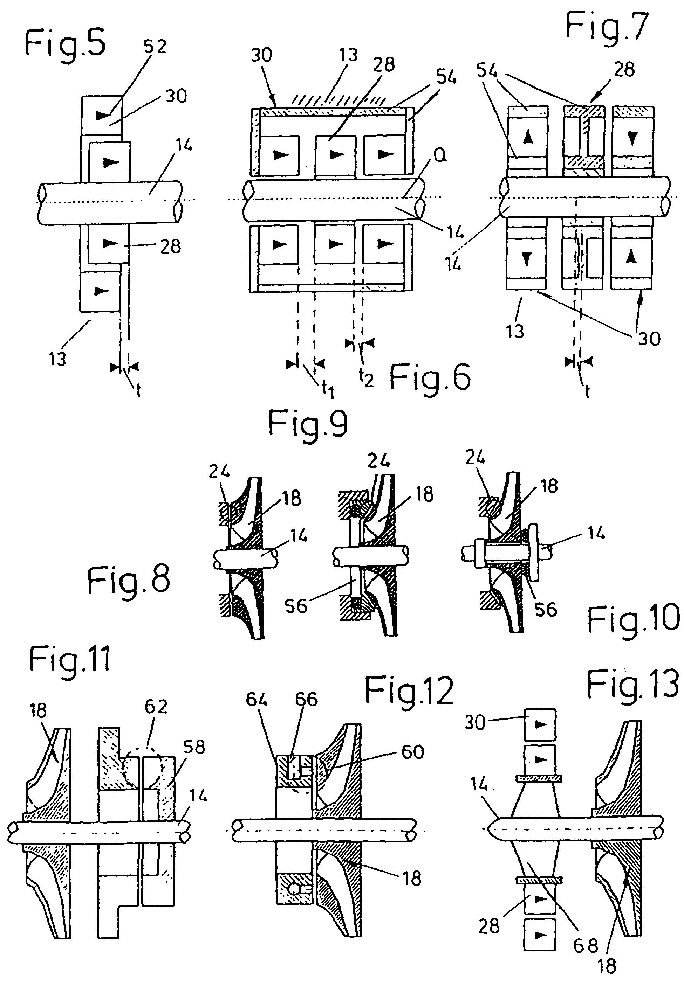

Fig. 5 zeigt schematisch an einer Rotorachse oder Welle 14 einen rotornahen Magnet- oder Lagerring 28 mit diesen umgebendem -- um jenes Maß t axial versetztem äußerem Magnetoder Lagerring 30; dort ist die Magnetisierungsrichtung durch Pfeile 52 angedeutet. Diese Lagerung beruht auf den abstoßenden Kräften der Magnete 28, 30.

Bei Lagern nach Fig. 6, die mit Scherkräften arbeiten, sind die rotor- und gehäuseseitigen Magnetringe 28, 30 meist auf gleicher Höhe, also nicht innen oder außen -- d.h. in unterschiedlichen Abständen zur Längsachse Q -- angebracht.

Bei sog. Reluktanzlagern nach Fig. 7 kann die Lagerwirkung darüber hinaus auch erzielt werden, wenn nur auf der Gehäuseseite oder nur auf der Rotorseite Magnete angeordnet werden. Auf der Gegenseite ist dann nur ferromagnetisches Material -- zumeist Eisen 54 -- vorhanden. Bei 13 ist gestrichelt die Befestigung am Gehäuse 12 angedeutet.

In der Zeichnung ist das Maß t der Versetzung durch die Magnetringe 28, 30 eines Magnetlagers bestimmt. In Fig. 6 ist das Maß t über die dort erkennbaren beiden Abstände t1 und t2 definiert: t = (t1 - t2) / 2.

Die Fig. 8 bis 10 deuten schematisch die Integration eines hydrodynamischen Gleitlagers 24 in ein Laufrad 18 mit Deckscheibe an. Ein wesentlicher Vorteil der Integration des Gleitlagers 24 in ein Laufrad 18 ist seine besondere dichtende Wirkung -- ähnlich der einer Gleitringdichtung mit hydrodynamisch abstoßenden Gleitflächen -- und damit die Eignung des Gleitlagers 24 als Spaltdichtung für das Laufrad 18.

Die Integration eines rein axial wirkenden hydrodynamischen Gleitlagers 24 in ein geschlossenes Laufrad 18 zeigt Fig. 8. Bei der Integration von aerodynamischen Gleitlagern in mehrere Laufräder 18 eines Rotors 16 müssen -- bis auf eines -- alle Gleitlager mit federnd gelagerten Gleitflächen ausgeführt sein. Die Aufhängung des Rotors 16 mit geringer Steifigkeit durch die Permanentmagnetlager 20, 22 kann nur für ein einzelnes Gleitlager zur Kompensation von Lagefehlern der Gleitflächen ausgenutzt werden. In Fig. 9 ist die gehäuseseitige Gleitfläche und in Fig. 10 die laufradseitige Gleitfläche des Gleitlagers 24 - in diesem Fall das gesamte Laufrad 18 - federnd gelagert dargestellt.

In Fig. 9, 10 ist jeweils bei 56 ein elastischer Ring zu erkennen, zudem sind die hydrodynamischen Lager 24 in Fig. 9, 10 als Kegellager ausgeführt. Damit läßt sich im Betrieb neben der präzisen axialen Führung zusätzlich eine sehr genaue radiale Führung des Rotors 16 erreichen.

Die Fig. 11, 12 zeigen schematisch je ein Beispiel für eine hydraulische Ausgleichseinrichtung -- Ausgleichsscheibe 58 (Fig. 11) -- und für ein hydrostatisches Gleitlager 60. Mit 62 ist in Fig. 11 ein Ringspalt bezeichnet, mit 64 in Fig. 12 eine Lagerscheibe mit Druckzuführung 66.

In Fig. 11 ist die Ausgleichsscheibe 58 laufradseitig im Betrieb durch den Förderdruck beaufschlagt, auf die andere Seite wirkt der Umgebungsdruck oder ein niedrigerer Stufendruck. Der Ringspalt 62 wird so bemessen, daß in der Betriebsphase eine Bewegung des Laufrades 18 durch den Achsschub in Richtung Saugseite zu einer Verringerung der Spaltweite führt und die resultierende Druckerhöhung im Spalt den Ausgleich des Achsschubes bewirkt, ohne daß eine Mindestspaltweite unterschritten wird.

Das hydrostatische Gleitlager 60 in Fig. 12 kann z.B. am Laufrad 18 der ersten Stufe angebracht sein. Die Druckversorgung des Gleitlagers 60 kann in der Betriebsphase durch Rückführung des Stufendruckes aus einer höheren Stufe realisiert werden.

Fig. 13 zeigt die Integration eines Vorsatzläufers 68 in das Innere eines Magnetlagers 28, 30. Durch diese Anordnung wird Platz gespart, der Zulauf des Fördermediums optimiert (axialer Zulauf: besseres Saugvermögen), und der Vorsatzläufer 68 ist weniger empfindlich auf radialen Versatz des Rotors 16. Gleiches ist auch für ein normales axiales Laufrad möglich.

## Patentansprüche

1. Lagerung für einen Rotor (16) einer Strömungsmaschine mit zumindest einem Permanentmagnetlager (20, 22) zur radialen Führung sowie mit wenigstens einem den Achsschub (B) der Strömungsmaschine aufnehmenden hydrodynamischen Gleitlager (24) zur axialen oder zur axialen und radialen Führung in der Betriebsphase, wobei eine dem Achsschub der Strömungsmaschine (10) entgegengesetzt gerichtete Kraft (A) erzeugbar ist,
**dadurch gekennzeichnet,**
**daß** in der Betriebsposition des Rotors (16) die Bauteile (32, 28) des zumindest einen Permanentmagnetlagers (20, 22) auf dem Rotor gegenüber den zugehörigen Bauteilen (34, 30) auf der Gehäuseseite axial entgegengesetzt zur Richtung des Achsschubes (B) aus der Kräftegleichgewichtslage versetzt sind.

2. Lagerung nach Anspruch 1, **dadurch gekennzeichnet, daß** die Gleitflächen der in der Betriebsphase wirksamen hydrodynamischen Gleitlager (24) während des Stillstandes, der An- und der Auslaufphasen voneinander getrennt sind sowie der Rotor (16) gegen wenigstens ein zusätzliches Gleit- oder Wälzlager gedrückt ist, das den Rotor während der Anfahr- und Auslaufphasen führt und so gestaltet ist, daß es bei niedrigen Drehzahlen sowie im Stillstand ein geringeres Reibmoment als die in der Lagerung verwendeten hydrodynamischen Gleitlager aufweist.

3. Lagerung nach Anspruch 1 oder 2, **dadurch gekennzeichnet, daß** das Maß der axialen Versetzung des Rotors (16) durch Anordnung der/des zusätzlichen Gleit- oder Wälzlager/s als Hilfslager (36) relativ zu dem/den hydrodynamischen Gleitlager/n (24) so begrenzt ist, daß die axial wirkende Kraft der Permanentmagnetlager (20, 22) auf den Rotor geringer ist als der minimale Achsschub der Strömungsmaschine (10) in der Betriebsphase.

4. Lagerung nach einem der Ansprüche 1 bis 3, **dadurch gekennzeichnet, daß** das Maß (t) der Versetzung von einem rotorseitigen Lagerring (28) eines Magnetlagers (22) der Strömungsmaschine (10) und von einem gehäuseseitigen Lagerring (30) bestimmt ist.

5. Lagerung nach einem der Ansprüche 1 bis 4, **gekennzeichnet durch** einen Weg für den Förderstrom **durch** einen Motorspalt oder **durch** einen Weg für den Förderstrom **durch** einen Lagerspalt eines druckseitigen Permanentmagnetlagers (22).

6. Lagerung nach wenigstens einem der Ansprüche 1 bis 5, **dadurch gekennzeichnet, daß** der Rotor (16) oder das Hilfslager (36) mit dem Rotor während der Anlaufphasen durch eine Hilfseinrichtung, insbesondere beim Rotor durch einen Elektromagneten, axial so in Richtung der/des hydrodynamischen Gleitlager/s (24) gefahren ist, daß die axial wirkende Kraft der Permanentmagnetlager (20, 22) auf den Rotor unter dem minimalen Achsschub der Strömungsmaschine (10) in der Betriebsphase liegt.

7. Lagerung nach wenigstens einem der Ansprüche 1 bis 6, **dadurch gekennzeichnet, daß** das hydrodynamische Gleitlager (24) ein aerodynamisches Gleitlager ist.

8. Lagerung nach wenigstens einem der Ansprüche 1 bis 7, **dadurch gekennzeichnet, daß** das hydrodynamische Gleitlager (24) an eine Deckscheibe (46, 48) eines geschlossenen Laufrades (18) angeschlossen ist, wobei gegebenenfalls die rotorseitige Gleitfläche zumindest eines hydrodynamischen Gleitlagers (24) in die Stirnseite eines Laufrades (18) mit Deckscheibe (46, 48) integriert und das Gleitlager an dieser Stelle Dichtung der Hochdruckseite des Laufrades gegen die Niederdruckseite ist.

9. Lagerung nach wenigstens einem der Ansprüche 1 bis 8, **dadurch gekennzeichnet, daß** der Rotor (16) radial durch die Permanentmagnetlager (20, 22) gelagert sowie ein hydrodynamisches Axiallager (24) nahe dem Schwerpunkt (S) des Rotors vorgesehen ist.

10. Lagerung nach Anspruch 9, **dadurch gekennzeichnet, daß** nahe dem Schwerpunkt (S) des Rotors (16) ein Hilfslager (36), insbesondere ein Kegel-Gleitlager, vorgesehen ist, wobei gegebenenfalls das Hilfslager (36) in die Rückseite eines Laufrades (18) integriert ist.

11. Lagerung nach wenigstens einem der Ansprüche 8 bis 10, **gekennzeichnet durch** einen Tragspalt des aerodynamischen Gleitlagers (24) von etwa 1 µm.

12. Lagerung nach wenigstens einem der Ansprüche 1 bis 11, **dadurch gekennzeichnet, daß** der Rotor eines die Strömungsmaschine (10) antreibenden Elektromotors (38) in den Rotor (16) der Strömungsmaschine integriert ist, wobei gegebenenfalls der Eletromotor als Synchronmotor mit Permanentmagneterregung ausgebildet ist.

13. Lagerung nach wenigstens einem der Ansprüche 1 bis 12, **dadurch gekennzeichnet, daß** Lager- oder Magnetringe (28, 30, 32, 34) der Permanentmagnetlager (22, 20) und ein Erregermagnet oder Magnetring (40) des Elektromotors (38) durch Schutzringe (44) geschützt sind, bevorzugt durch elektrisch leitende Schutzringe, wobei gegebenenfalls zumindest ein rotorseitiger Magnetring (28, 30, 32, 34) mit einer Bandage od. dgl. Schutzschicht insbesondere aus kohle- oder glasfaserverstärktem Kunststoff vorgesehen ist.

14. Lagerung nach wenigstens einem der Ansprüche 1 bis 13, **dadurch gekennzeichnet, daß** einzelne Bauelemente des Rotors (16) wie Laufrad (18), Zwischenscheibe (45), und/oder die Gehäusescheibe (36, 48) aus Keramik gefertigt sind.

15. Lagerung nach wenigstens einem der Ansprüche 3 oder 10 bis 14, **dadurch gekennzeichnet, daß** das Maß des Versetzens des Rotors (16) durch das Hilfslager (26) begrenzt ist, wobei gegebenenfalls der Rotor (16) im Betrieb vom Hilfslager (36) abhebbar und vom hydrodynamischen Gleitlager (24) ohne Berührung der Gleitflächen axial führbar ist.

16. Lagerung nach wenigstens einem der Ansprüche 1 bis 15, **dadurch gekennzeichnet, daß** dem hydrodynamischen Gleitlager (24) wenigstens ein hydrostatisches Gleitlager (60) oder eine hydraulische Ausgleichseinrichtung (58) unterstützend zugeordnet ist, oder daß das hydrodynamische Gleitlager (24) durch ein hydrostatisches Gleitlager (60) oder eine hydraulische Ausgleichseinrichtung (58) ersetzt ist.

17. Lagerung nach wenigstens einem der Ansprüche 1 bis 16, **gekennzeichnet durch** einen Vorsatzläufer (68) in einem Magnetlager (28, 30).

18. Verwendung der Lagerung nach wenigstens einem der Ansprüche 1 bis 17 für den Rotor einer Strömungsmaschine zum Fördern flüssigen Wasserstoffs.

## Claims

1. Mounting for a turbo-machine rotor (16) with at least one permanent magnet bearing (20, 22) for radial guidance and with at least one hydrodynamic sliding bearing (24) receiving the axial thrust (B) of the turbo-machine for axial or axial and radial guidance in the operating phase, a force (A) directed counter to the axial thrust of the turbo-machine (10) being producible, **characterised in that** in the operating position of the rotor (16) the components (32, 28) of the at least one permanent magnet bearing (20, 22) on the rotor are offset from the position of force equilibrium in a manner which is axially opposed to the direction of axial thrust (B) relative to the associated components (34, 30) on the housing side.

2. Mounting according to claim 1, **characterised in that** the sliding faces of the hydrodynamic sliding bearings (24) active in the operating phase are separated from one another at rest, during the starting and slow down phases and the rotor (16) is pressed against at least one additional sliding or rolling bearing which guides the rotor during starting and slow down phases and is formed in such a way that at low speeds and at rest it has a lower moment of friction than the hydrodynamic sliding bearings used in the mounting.

3. Mounting according to claim 1 or 2, **characterised in that** the extent of axial offset of the rotor (16) is limited relative to the hydrodynamic sliding bearing(s) (24) by arrangement of the additional sliding or rolling bearing(s) as auxiliary bearings (36) such that the axially acting force of the permanent magnet bearings (20, 22) on the rotor is less than the minimum axial thrust of the turbo-machine (10) in the operating phase.

4. Mounting according to any one of claims 1 to 3, **characterised in that** the extent (t) of the offset is determined by a rotor-side bearing ring (28) of a magnet bearing (22) of the turbo-machine (10) and a housing-side bearing ring (30).

5. Mounting according to any one of claims 1 to 4, **characterised by** a path for the conveying current through a motor gap or by a path for the conveying current through a bearing gap of a pressure-side permanent magnet bearing (22).

6. Mounting according to at least one of claims 1 to 5, **characterised in that** the rotor (16) or the auxiliary bearing (36) with the rotor is driven axially in the direction of the hydrodynamic sliding bearing(s) (24) during the starting phase by an auxiliary device, in particular in the case of the rotor by an electromagnet, in such a way that the axially acting force of the permanent magnet bearing (20, 22) on the rotor is below the minimum axial thrust of the turbo-machine in the operating phase.

7. Mounting according to at least one of claims 1 to 6, **characterised in that** the hydrodynamic sliding bearing (24) is an aerodynamic sliding bearing.

8. Mounting according to at least one of claims 1 to 7, **characterised in that** the hydrodynamic sliding bearing (24) is connected to a side plate (46, 48) of a closed runner (18), the rotor-side sliding face of at least one hydrodynamic sliding bearing (24) optionally being integrated into the end face of a runner (18) with side plate (46, 48) and the sliding bearing at this point being the seal of the high-pressure side of the runner against the low-pressure side.

9. Mounting according to at least one of claims 1 to 8, **characterised in that** the rotor (16) is mounted radially by the permanent magnet bearing (20, 22) and a hydrodynamic axial bearing (24) is provided close to the centre of gravity (S) of the rotor.

10. Mounting according to claim 9, **characterised in that** an auxiliary bearing (36), in particular a cone sliding bearing is provided close to the centre of gravity (S) of the rotor (16), the auxiliary bearing (36) optionally being integrated into the rear of a runner (18).

11. Mounting according to at least one of claims 8 to 10, **characterised by** a supporting gap of the aerodynamic sliding bearing (24) of at least 1 µm.

12. Mounting according to at least one of claims 1 to 11, **characterised in that** the rotor of an electric motor (38) driving the turbo-machine (10) is integrated into the rotor (16) of the turbo-machine, the electric motor optionally being designed as a synchronous motor with permanent magnet excitation.

13. Mounting according to at least one of claims 1 to 12, **characterised in that** the bearing or magnet rings (28, 30, 32, 34) of the permanent magnet bearings (22, 20) and an exciting magnet or magnet ring (40) of the electric motor (38) are protected by guard rings, preferably by electrically conductive guard rings, at least one rotor-side magnet ring (28, 30, 32, 34) optionally being provided with a banding or similar protective layer in particular made from carbon fibre-reinforced or glass fibre-reinforced plastics material.

14. Mounting according to at least one of claims 1 to 13, **characterised in that** individual components of the rotor (16) such as runner (18), intermediate plate (45), and/or the housing plate (36, 48) are made from ceramics.

15. Mounting according to at least one of claims 3 or 10 to 14, **characterised in that** the extent of the offset of the rotor (16) is limited by the auxiliary bearing (26), the rotor (16) optionally being liftable during operation by the auxiliary bearing (36) and axially guidable by the hydrodynamic sliding bearing (24) without touching the sliding faces.

16. Mounting according to at least one of claims 1 to 15, **characterised in that** at least one hydrostatic sliding bearing (60) or one hydraulic compensating device (58) is associated with the hydrodynamic sliding bearing (24) in a supportive manner, or **in that** the hydrodynamic sliding bearing (24) is replaced by a hydrostatic sliding bearing (60) or a hydraulic compensating device (58).

17. Mounting according to at least one of claims 1 to 16, **characterised by** a runner attachment (68) in a magnet bearing (28, 30).

18. Use of the mounting according to at least one of claims 1 to 17 for the rotor of a turbo-machine for conveying liquid hydrogen.

## Revendications

1. Agencement de palier pour un rotor (16) d'une machine à écoulement de fluide avec au moins un palier à aimants permanents (20, 22) pour le guidage radial, ainsi qu'avec au moins un palier hydrodynamique de glissement (24) supportant le déplacement axial (B) de la machine à écoulement de fluide pour le guidage axial ou axial et radial au cours de la phase de fonctionnement, de sorte qu'une force (A) dirigée dans le sens opposé au déplacement axial de la machine à écoulement de fluide (10) soit susceptible d'être créée, **caractérisé en ce que**
dans la position de fonctionnement du rotor (16), les composants (32, 28) d'au moins l'un des paliers (20, 22) à aimants permanents sur le rotor soient décalés dans la direction du déplacement axial (B) en dehors de la position d'équilibrage des forces, par rapport aux composants associés (34, 30) monté du côté du boîtier et disposé axialement en face.

2. Agencement de palier selon la revendication 1, **caractérisé en ce que** les surfaces de glissement du palier hydrodynamique de glissement (24) actives en phase de fonctionnement sont séparées l'une de l'autre pendant l'immobilisation, les phases de démarrage et de mise à l'arrêt, et **en ce que** le rotor (16) est pressé contre au moins un palier supplémentaire de glissement ou de roulement, qui guide le rotor pendant les phases de démarrage et de mise à l'arrêt et qui présente une conformation telle que pour les faibles vitesses de rotation ainsi qu'à l'arrêt, il présente un plus faible couple de frottement que les paliers hydrodynamiques de glissement utilisés dans l'agencement de palier.

3. Agencement de palier selon la revendication 1 ou 2, **caractérisé en ce que** l'amplitude du décalage axial du rotor (16) est limitée par l'agencement du ou des palier(s) supplémentaire(s) de glissement ou de roulement pour servir de palier auxiliaire (36) par rapport au(x) palier(s) hydrodynamique(s) de glissement (24), de sorte que la force axiale agissant du palier à aimants permanents (20, 22) soit plus faible sur le rotor que le déplacement axial minimal de la machine (10) à écoulement de fluide en phase de fonctionnement.

4. Agencement de palier selon l'une des revendications 1 à 3, **caractérisé en ce que** la grandeur (t) du décalage est déterminée par une bague de palier (28) du côté du rotor d'un palier magnétique (22) de la machine à écoulement de fluide (10) et par une bague de palier (30) du côté du boîtier.

5. Agencement de palier selon l'une des revendications 1 à 4, **caractérisé par** un passage pour le débit refoulé à travers un entrefer de moteur ou par un passage pour le débit refoulé à travers un intervalle de palier d'un palier à aimants permanents (22) du côté en pression.

6. Agencement de palier selon au moins l'une des revendications 1 à 5, **caractérisé en ce que** le rotor (16) ou le palier auxiliaire (36) est déplacé avec le rotor pendant la phase de démarrage par un organe auxiliaire, en particulier pour le rotor par un électro-aimant, axialement dans la direction du/des palier(s) hydrodynamique(s) de glissement (24), de sorte que la force agissant axialement du palier à aimants permanents (20, 22) s'exerce sur le rotor sous le déplacement axial minimal de la machine (10) à écoulement de fluide en phase de fonctionnement.

7. Agencement de palier selon au moins l'une des revendications 1 à 6, **caractérisé en ce que** le palier hydrodynamique de glissement (24) est un palier aérodynamique de glissement.

8. Agencement de palier selon au moins l'une des revendications 1 à 7, **caractérisé en ce que** le palier hydrodynamique de glissement (24) est relié à un disque de couverture (46, 48) d'une roue à aubes (18) fermée, **en ce que** le cas échéant la surface de glissement du côté du rotor est intégrée à au moins un palier hydrodynamique de glissement (24) dans la face frontale d'une roue à aubes (18) avec un disque de couverture (46, 48), et **en ce que** le palier de glissement constitue à cet emplacement l'étanchéité de la face à haute pression de la roue à aubes par rapport à la face à basse pression.

9. Agencement de palier selon au moins l'une des revendications 1 à 8, **caractérisé en ce que** le rotor (16) est monté à rotation radialement par l'intermédiaire d'un palier à aimants permanents (20, 22), et **en ce qu'**un palier hydrodynamique axial (24) est prévu à proximité du centre de gravité (S) du rotor.

10. Agencement de palier selon la revendication 9, **caractérisé en ce que** à proximité du centre de gravité (S) du rotor (16), est prévu un palier auxiliaire (36), en particulier un palier de glissement conique, et **en ce que** le cas échéant, le palier auxiliaire (36) est intégré dans la face arrière d'une roue à aubes (18).

11. Agencement de palier selon au moins l'une des revendications 8 à 10, **caractérisé par** un intervalle d'appui du palier aérodynamique de glissement (24) d'environ 1 µm.

12. Agencement de palier selon au moins l'une des revendications 1 à 11, **caractérisé en ce que** le rotor d'un moteur électrique (38) entraînant la machine à écoulement de fluide (10) est intégré dans le rotor (16) de la machine d'écoulement de fluide, et **en ce que**, le cas échéant, le moteur électrique est réalisé sous forme de moteur synchrone à excitation par aimants permanents.

13. Agencement de palier selon au moins l'une des revendications 1 à 12, **caractérisé en ce que** la bague de palier ou d'aimants (28, 30, 32, 34) du palier à aimants permanents (22, 20) et un aimant d'excitation ou une bague magnétique (40) du moteur électrique (38) sont protégés par des bagues de protection (44), de préférence par des bagues de protection électriquement conductrices, et **en ce que**, le cas échéant, au moins une bague magnétique (28, 30, 32, 34) du côté du rotor est munie d'une couche de protection formant bandage ou similaire, en particulier en matière plastique renforcée par des fibres de carbone ou des fibres de verre.

14. Agencement de palier selon au moins l'une des revendications 1 à 13, **caractérisé en ce que** des composants individuels du rotor (16) tels que la roue à aubes (18), le disque intermédiaire (45) et/ou le disque de boîtier (36, 48) sont réalisés en céramique.

15. Agencement de palier selon au moins l'une des revendications 3 ou 10 à 14, **caractérisé en ce que** l'amplitude du décalage du rotor (16) est limitée par le palier auxiliaire (36), **en ce que**, le cas échéant, le rotor (16) en fonctionnement est susceptible de se soulever du palier auxiliaire (36) et d'être supporté axialement par le palier hydrodynamique de glissement (24) sans contact des surfaces de glissement.

16. Agencement de palier selon au moins l'une des revendications 1 à 15, **caractérisé en ce que** le palier hydrodynamique de glissement (24) est associé en appui à au moins un palier hydrostatique de glissement (60) ou à un organe hydraulique de compensation (58), et **en ce que** le palier hydrodynamique de glissement (24) est remplacé par un palier hydrostatique de glissement (60) ou par un organe hydraulique de compensation (58).

17. Agencement de palier selon au moins l'une des revendications 1 à 16, **caractérisé par** une roue à aubes additionnelle (68) dans un palier magnétique (28, 30).

18. Application de l'agencement de palier selon au moins l'une des revendications 1 à 17 pour le rotor d'une machine à écoulement de fluide pour transporter de l'hydrogène liquide.
